# EUROPÄISCHE PATENTSCHRIFT

(11) **EP 2 665 580 B1**
(45) Veröffentlichungstag und Bekanntmachung des Hinweises auf die Patenterteilung: **05.11.2014**
(21) Anmeldenummer: 12702198.8
(22) Anmeldetag: 17.01.2012
(51) Int. Cl.: B25J 19/00, B23P 19/00, B21J 15/32, B65G 51/02, F16L 11/12

(54) **VORRICHTUNG ZUR AUTOMATISIERTEN ZUFÜHRUNG VON VERBINDUNGSELEMENTEN ZU EINER VERARBEITUNGSEINHEIT SOWIE ZUFÜHRSCHLAUCH FÜR DIE VERBINDUNGSELEMENTE**
APPARATUS FOR THE AUTOMATED FEED OF CONNECTING ELEMENTS TO A PROCESSING UNIT AND FEED HOSE FOR THE CONNECTING ELEMENTS
DISPOSITIF D'AMENÉE AUTOMATISÉE D'ÉLÉMENTS DE LIAISON À UNE UNITÉ D'USINAGE, AINSI QUE FLEXIBLE D'AMENÉE DES ÉLÉMENTS DE LIAISON

(30) Priorität: 18.01.2011 DE 102011008845
(43) Veröffentlichungstag der Anmeldung: 27.11.2013
(73) Patentinhaber: LEONI Kabel Holding GmbH, 90402 Nürnberg (DE)
(72) Erfinder: KÜHN, Hans-Peter, 98593 Floh-Seligenthal (DE)
(74) Vertreter: FDST Patentanwälte
(86) Internationale Anmeldenummer: PCT/EP2012/050657
(87) Internationale Veröffentlichungsnummer: WO 2012/098128

(56) Entgegenhaltungen:
- EP-A1- 2 258 508
- WO-A1-2004/076133
- DE-A1-102004 034 349
- DE-U1- 29 507 041
- JP-A- 2004 203 605
- US-A1- 2004 217 144

## Beschreibung

Die Erfindung betrifft eine Vorrichtung zur automatisierten Zuführung für Verbindungselemente wie beispielsweise Bolzen, Nieten, Schrauben, Muttern etc. zu einer Verarbeitungseinheit, wie beispielsweise ein Schweißkopf, eine Nieteinheit, eine Schraubeinheit etc. mit den Merkmalen des Oberbegriffs des Anspruchs 1. Die Erfindung betrifft weiterhin einen Zuführschlauch für Verbindungselemente mit den Merkmalen des Oberbegriffs des Anspruchs 12.

Eine derartige Vorrichtung ist aus der EP 2 258 508 A1 und ein solcher Zuführschlauch ist aus der DE 295 07 041 U1 zu entnehmen.

In der industriellen Fertigungstechnik, beispielsweise im Kraftfahrzeugbereich werden mit Hilfe von automatisierten Verarbeitungseinheiten (Blech-) Fügeteile in einem automatisierten Verfahren beispielsweise durch Schweißen, Schrauben, Nieten etc. miteinander verbunden bzw. die Fügeteile werden mit derartigen Verbindungselementen, wie beispielsweise Schweißbolzen etc. versehen.

Die einzelnen Verbindungselemente werden hierbei üblicherweise über Zuführschläuche der Verarbeitungseinheit zugeführt, beispielsweise mittels Druckluft in die Verarbeitungseinheit eingeschossen. Die Zuführschläuche sind dabei teilweise über mehrere 10m lang.

Aus der EP 2 258 508 A1 ist eine derartige Verarbeitungseinheit zu entnehmen, der über einen Zuführschlauch beispielsweise T-förmige Verbindungselemente zugeführt werden. In der DE 295 07 041 U1 ist ein spezieller Zuführschlauch beschrieben, bei dem in den Schlauchmantel stabförmige Einlagen zur Führung der Verbindungselemente eingebettet sind. Ein entsprechend gebildeter Transportkanal für die Verbindungselemente kann dabei eine an die Querschnittskontur des Verbindungselements angepasste Form aufweisen.

Um den industriellen Verarbeitungsprozess nicht zu unterbrechen ist eine reibungslose Zuführung der Verbindungselemente erforderlich. Die Zuführschläuche bestehen in der Regel aus einem Kunststoffmaterial mit einer geeigneten reibungsarmen Innen-Oberfläche, um das Einschießen der Verbindungselemente zu gestatten. Beispielsweise sind die Zuführschläuche aus Polyamid mit einer vergleichsweise hohen Härte. Durch dieses Erfordernis weisen die Zuführschläuche oftmals eine nur unzureichende Biegeflexibilität auf, so dass bei Biegebeanspruchungen die Gefahr eines Knickens des Zuführschlauches besteht. Aufgrund des vergleichsweise harten Kunststoffwerkstoffes führt ein Knicken zu irreversible Knickstellen, die die Zuführung der Verbindungselemente dauerhaft unterbrechen. In der Regel ist ein Austausch des gesamten Zuführschlauchs erforderlich. Dies ist vergleichsweise zeitaufwändig und führt zu unerwünschten Produktionsausfällen.

Insbesondere bei der zunehmenden Verwendung von mehrachsigen Industrierobotern, beispielsweise 3- bis 6-achsigen Industrierobotern, die üblicherweise einen auf einer Schwinge drehbar gelagerten Roboterarm aufweisen, an dessen Freiende eine die Verarbeitungseinheit tragende Roboterhand angeordnet ist, bestehen hohe Anforderungen an die Zuführleitungen insbesondere im Hinblick auf die Flexibilität.

Bei heutigen Lösungen sind die Zuführschläuche für die Verbindungselemente neben einem Roboter-Schlauchpaket separat geführt. Bei einem derartigen Roboter-Schlauchpaket werden die zusätzlich benötigten Versorgungsleitungen geführt, beispielsweise Fluid- oder Elektroleitungen zur Versorgung der Verarbeitungseinheit. Bei derartigen Schlauchpaketen handelt es sich um Leitungsführungen, die auf den Bewegungsablauf des mehrachsigen Industrieroboters abgestimmt sind und bei denen mehrere Versorgungsleitungen in einem gemeinsamen Schlauch oder Rohr geführt werden. Üblicherweise ist eine komplette Leitungsführungseinheit vorgesehen, die einen durch die Bewegung der Roboterhand erforderlichen Längenausgleich des Schlauchpakets beispielsweise durch Federeinheiten etc. zur Verfügung stellt. Ein solches Schlauchpaket ist beispielsweise aus der WO 2004/076133 A1 zu entnehmen.

Ausgehend hiervon liegt der Erfindung die Aufgabe zugrunde eine verbesserte Zuführung für derartige Verbindungselemente zu Verarbeitungseinheiten, insbesondere bei Industrierobotern zu ermöglichen.

Die Aufgabe wird gemäß der Erfindung gelöst durch eine Vorrichtung zur automatisierten Zuführung von Verbindungselementen zu einer Verarbeitungseinheit mit den Merkmalen des Patentanspruchs 1. Die Aufgabe wird weiterhin erfindungsgemäß gelöst durch einen Zuführschlauch für Verbindungselemente mit den Merkmalen des Anspruchs 12.

Bei der Vorrichtung handelt es sich insbesondere um einen mehrachsigen Industrieroboter. Die Vorrichtung umfasst ein sogenanntes Schlauchpaket, in dem zur Versorgung der Verarbeitungseinheit mit Betriebsmitteln innerhalb eines Schutzmantels mehrere Versorgungsleitungen geführt sind. Der Schutzmantel ist beispielsweise ein Wellrohr oder auch ein anderes flexibles Rohr bzw. ein Schlauch aus einem geeigneten Kunststoff, in den die Versorgungsleitungen eingezogen sind. Das Schlauchpaket umfasst als weitere Versorgungseinleitung einen flexiblen Zuführschlauch für die Zuführung der Verbindungselemente zu der Verarbeitungseinheit. Der Zuführschlauch ist dabei gebildet aus einem Innenschlauch, der in einem Schlauchmantel aus einem elastischen Kunststoff eingebettet ist. Der Innenschlauch ist dabei zur Führung der Verbindungselemente, beispielsweise für ein Einschießen der Verbindungselemente zur Verarbeitungseinheit mittels Druckluft, geeignet ausgebildet. Der Innenschlauch weist hierzu einen an die Querschnittselemente angepassten Innenquerschnitt sowie eine geeignete reibungsarme Oberfläche für eine gleitende Führung der Verbindungselemente auf.

Unter eingebettet wird hierbei verstanden, dass der Schlauchmantel unmittelbar am Innenschlauch anliegt und diesen vollständig umgibt. Durch das Einbetten des Innenschlauchs in einem Schlauchmantel aus einem elastischen Kunststoff ist der Innenschlauch innerhalb des Zuführschlauchs quasi nach Art einer neutralen Faser eingebettet. Durch diesen speziellen zweiteiligen Aufbau ist auch bei hohen Biegebeanspruchungen ein ausreichender Knickschutz erzielt. Im Falle einer Biegung des Zuführschlauchs wird daher im Wesentlichen lediglich der Schlauchmantel auf Zug bzw. Druck beansprucht und die Gefahr des Knickens des üblicherweise vergleichsweise harten Innenschlauchs ist reduziert. Ein kontinuierlicher störungsfreier Betrieb der gesamten Vorrichtung ist dadurch sichergestellt. Durch die Einbettung des beispielsweise T-förmigen Innenschlauchs in einen vorzugsweise kreisrunden Schlauchmantel ist der Zuführschlauch zudem einfach und robust handhabbar, vergleichbar mit einem Kabel, und eignet sich daher zur Integration als Versorgungsleitung in das Schlauchpaket.

Die Wandstärke des Schlauchmantels liegt dabei typischerweise im Bereich von wenigen Millimetern, beispielsweise im Bereich von 2 bis 5 mm. Bei dem zweiteilig aufgebauten Zuführschlauch handelt es sich dabei vorzugsweise um eine Endlosware. Der Schlauchmantel ist dabei vorzugsweise durch einen Extrusionsprozess auf den Innenschlauch aufgebracht.

Allgemein werden für die beiden Komponenten, nämlich Innenschlauch und Schlauchmantel, unterschiedliche Materialien verwendet, so dass selbst bei einem Extrusionsprozess die beiden Komponenten miteinander stofflich unverbunden sind. Durch diese Ausgestaltung ist zum einen ein einfaches partielles Abnehmen des Schlauchmantels beispielsweise in einem Endbereich ermöglicht. Zum anderen besteht dadurch lokal die Möglichkeit, dass der Innenschlauch und der Schlauchmantel sich relativ zueinander bewegen, so dass beispielsweise bei einer Biegebeanspruchung eine gewisse Entkopplung der wirkenden Zug- bzw. Druckkräfte zwischen Schlauchmantel und Innenschlauch erzielt ist. Die Belastung des Innenschlauchs ist dadurch reduziert.

Um eine gute Führung der Verbindungselemente zu ermöglichen ist der Innenschlauch üblicherweise aus einem vergleichsweise harten Material, insbesondere Polyamid. Demgegenüber ist der Schlauchmantel aus einem deutlich weicheren und elastischeren Material. Bei einer Biegung ist der Schlauchmantel daher im Vergleich mit dem harten Innenschlauch ohne weiteres in der Lage - aufgrund seiner geringeren Härte und der damit einhergehenden verbesserten Elastizität - Dehnungen und Stauchungen ohne Schaden aufzunehmen.

Zweckdienlicherweise weist dabei der Innenschlauch eine um mehr als 30% und vorzugsweise mehr als 50%ig höhere Härte als der Schlauchmantel auf. Der Schlauchmantel weist beispielsweise eine Shore A-Härte von 40 bis 50 und der Innenschlauch eine Shore A-Härte von etwa 70 bis 80 auf. Als Material für den Schlauchmantel wird vorzugsweise Polyurethan eingesetzt.

Zweckdienlicherweise ist der Schlauchmantel allgemein aus einem thermoplastischen Elastomer, insbesondere einem Polyurethan-Elastomer ausgebildet. Durch die elastomeren, also elastischen Eigenschaften des Schlauchmantels wird der Zuführschlauch selbst nach großen Biegebeanspruchen wieder in eine für die Zuführung der Verbindungselemente geeignete Ausgangslage automatisch zurückgebracht.

Wie bereits ausgeführt ist von besonderer Bedeutung, dass die beiden Komponenten stofflich unverbunden sind. Dies wird vorzugsweise durch eine geeignete Materialpaarung oder in bevorzugter Alternative oder Ergänzung auch durch eine zusätzliche Trennschicht, vorzugsweise eine beispielsweise durch ein Vlies gebildete Bandagierung erreicht. Durch diese Maßnahme ist auch bei einer Koextrusion zuverlässig sichergestellt, dass der Schlauchmantel am Innenschlauch zwar unmittelbar und insbesondere auch formschlüssig anliegt, jedoch keine stoffliche Verbindung mit diesem eingeht. Bei der Bandagierung handelt es sich dabei vorzugsweise um eine Vollbandagierung, das heißt das Trennmaterial, beispielsweise das (Polyester-) Vlies überdeckt alle Bereiche des Innenschlauchs.

In bevorzugter Weiterbildung ist der Schlauchmantel endseitig vom Innenschlauch entfernt, so dass ein End-Teilstück des Innenschlauchs als ein Steckkupplungselement zur Verbindung mit der Verarbeitungseinheit ausgebildet ist. Das freigelegte Endteilstück ist daher im Betrieb in die Verarbeitungseinheit eingesteckt und definiert damit eine Übergabestelle für die Verbindungselemente vom Zuführschlauch in die eigentliche Verarbeitungseinheit.

Das Schlauchpaket ist üblicherweise an der Vorrichtung insbesondere an einem Roboterarm des Industrieroboters mittels geeigneten Führungselementen gehalten und geführt. Ergänzend zu diesen Führungselementen für das Schlauchpaket als solches ist zusätzlich ein Halteelement zur Zugentlastung für den Zuführschlauch vorgesehen, welches den Zuführschlauch einzelweise am Schlauchmantel klemmend greift. Das Halteelement klemmt dabei allgemein den Schlauchmantel schellenartig ein. Erst durch die Ausgestaltung mit dem flexiblen Schlauchmantel ist eine derartige einzelweise Halterung des Zuführschlauchs, insbesondere bei einem Industrieroboter ermöglicht, ohne dass die Gefahr einer Beschädigung für den harten Innenschlauch besteht.

Dieses Halteelement ist dabei vorzugsweise in unmittelbarer Nähe des freigelegten Endstücks und damit des Steckkupplungselements angeordnet. Bei der Verwendung eines mehrachsigen Industrieroboters ist das Halteelement vorzugsweise an einem Flansch zwischen einem Roboterarm und einer Roboterhand befestigt, wobei die Roboterhand das Verarbeitungswerkzeug trägt oder dieses bildet.

Der Innenquerschnitt des Innenschlauchs ist allgemein an die zu verarbeitenden Verbindungselemente angepasst. In vielen Anwendungsfällen, bei denen mit einem Kopf versehene bolzenförmige Elemente verarbeitet werden, wie beispielsweise Schrauben, Niete etc. weist der Innenmantel daher entsprechend ein T-förmiges Innenquerschnittsprofil auf. Der Außenquerschnitt des Innenschlauchs kann ebenfalls T-förmig sein oder bereits auch rund. Der Außenquerschnitt des Schlauchmantels ist bevorzugt kreisrund, um eine geeignete Führung innerhalb des Schlauchpakets zu gewährleisten.

Innerhalb des Schlauchpakets sind als Versorgungsleitungen vorzugsweise Steuerleitungen edienschläuche, wie beispielsweise Pneumatikschläuche, Wasserschläuche etc. sowie elektrische Versorgungsleitungen, beispielsweise eine Stromleitung für eine Schweißverarbeitungseinheit vorgesehen. In zweckdienlicher Weiterbildung ist an der Vorrichtung weiterhin eine Längenausgleichseinheit mit einer Rückstellfeder angeordnet, die bei einer Bewegung der Vorrichtung, insbesondere der Roboterhand, für einen automatischen Längenausgleich des Schlauchpakets sorgt.

Zusammenfassend zeichnet sich der Zuführschlauch dadurch aus, dass durch das "Umspritzen" (Einbetten) des Innenschlauchs mit dem Schlauchmantel der Innenschlauch einen deutlich verbesserten Knickschutz erhält. Selbst nach einem Einknicken, verursacht durch eine Roboterbewegung bzw. ein Einklemmen, springt bzw. federt der Zuführschlauch - und damit auch der Innenschlauch - aufgrund des elastischen Schlauchmantels in einen Zustand zurück, der eine weitere störungsfreie Zuführung der Verbindungselemente gewährleistet.

Ein weiterer besonderer Vorteil des Zuführschlauchs ist in der Möglichkeit der einfachen Integration in ein herkömmliches Schlauchpaket zu sehen. Insbesondere da der Zuführschlauch sich aufgrund des Schlauchmantels wie ein herkömmliches Kabel oder Schlauch handhaben und sich insbesondere auch in einer Zugentlastung führen lässt. Bevorzugt ist dabei eine klemmende Halterung des Zuführschlauchs ermöglicht und vorgesehen, bei der der Schlauchmantel verformt wird. Eine Schädigung des Innenschlauchs tritt hierbei nicht auf.

Eine derartige Integration in ein Schlauchpaket war bei bisherigen Zuführschläuchen, die unter Umständen teilweise in Schutzrohren geführt wurden, nicht möglich, da eine Klemmbefestigung der Schutzrohre mit ausreichender Klemmkraft nicht möglich war.

Durch die lösbare Anordnung des Schlauchmantel am Innenschlauch ist weiterhin ein "Abmanteln" z.B. in Anschlussbereichen ermöglicht. Der Schlauchmantel geht daher mit dem Innenschlauch keine stoffschlüssige Verbindung ein.

Ein Ausführungsbeispiel der Erfindung wird im Folgenden anhand der Figuren näher erläutert. Diese zeigen in vereinfachten Darstellungen:
- Fig. 1: einen 6-achsigen Industrieroboter mit einem in einer Längenausgleichseinheit geführten Schlauchpaket, in dem ein Zuführschlauch für Verbindungselemente angeordnet ist,
- Fig. 2: eine vergrößerte Darstellung des in Fig. 1 mit dem Kreis A gekennzeichneten Bereichs,
- Fig. 3A-3D: eine erste Ausführungsvariante des Zuführschlauchs, wobei Fig. 3A einen Querschnitt gemäß der Schnittlinie A-A der Seitenansicht der Fig. 3B, Fig. 3C eine perspektivische Darstellung mit abgemanteltem Endstück und Fig. 3D eine vergrößerte Darstellung des Endstücks mit darin angeordnetem Niet zeigen, sowie
- Fig. 4A-4B: eine zweite Variante des Zuführschlauchs im Querschnitt (Fig. 4A) sowie in Seitenansicht (Fig. 4B).

In den Figuren sind gleichwirkende Teile mit den gleichen Bezugszeichen versehen.

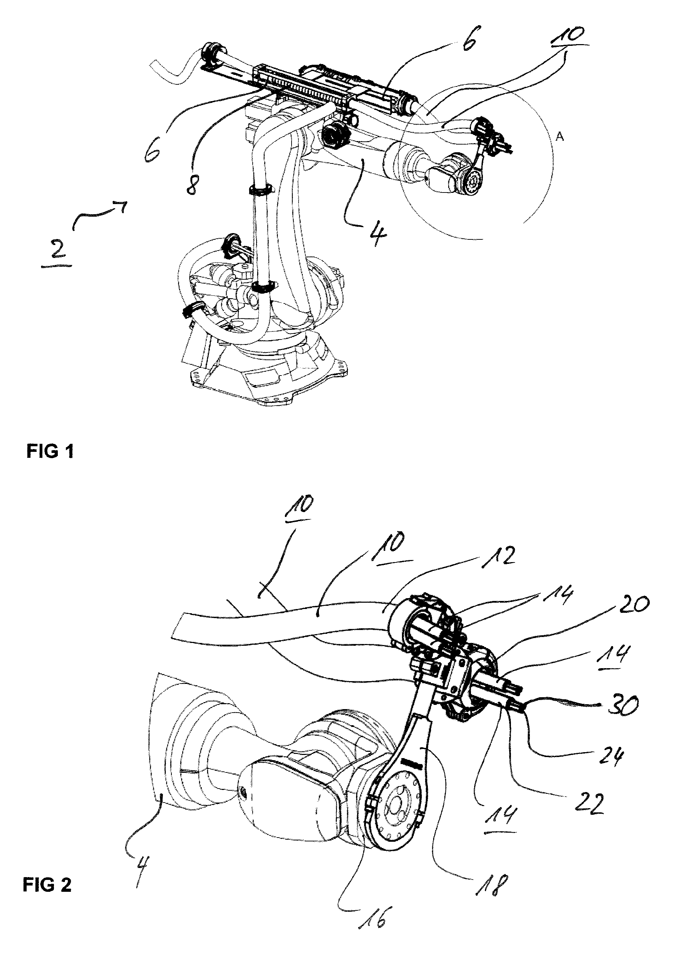

Als Vorrichtung zur automatisierten Zuführung von Verbindungselementen ist in Figur 1 beispielhaft ein mehrachsiger, insbesondere 6-achsiger Industrieroboter dargestellt. Aufbau und Wirkungsweise derartiger Industrieroboter 2 sind grundsätzlich bekannt. Der Industrieroboter 2 umfasst einen um eine sogenannte Achse-3 drehbar gelagerten Roboterarm 4, an dem endseitig ein Flansch 16 zur Montage einer hier nicht näher dargestellten Verarbeitungseinheit / Roboterhand angeordnet ist. Im Bereich der Achse-3 ist auf der Oberseite des Roboterarms 4 eine Längenausgleichseinheit 6 mit einer Rückholfeder 8 angeordnet. Im Ausführungsbeispiel sind zwei derartiger Längenausgleichseinheiten 6 jeweils für ein Schlauchpaket 10 angeordnet. Die Schlauchpakete 10 werden jeweils in Richtung zu der Verarbeitungseinheit in geeigneter Weise geführt.

Das Schlauchpaket umfasst einen Schutzmantel 12, der beispielsweise als Wellrohr oder als sonstiges flexibles Kunststoffrohr ausgebildet ist. Innerhalb des Schutzmantels sind mehrere Versorgungsleitungen geführt, von denen im Ausführungsbeispiel lediglich pro Schlauchpaket 10 zwei Zuführschläuche 14 dargestellt sind.

Im Ausführungsbeispiel sind die jeweiligen Schlauchpakete 10 jeweils vollständig durch die Längenausgleichseinheit 6 hindurchgeführt und innerhalb der Längenausgleichseinheiten 6 von einer Schraubenfeder umgeben, die sich einerseits am Schlauchmantel 12 und andererseits an der Längenausgleichseinheit 6 abstützt und eine Rückstellkraft auf das Schlauchpaket 10 ausübt. Grundsätzlich besteht auch die Möglichkeit, dass der Schutzmantel 12 innerhalb der Längenausgleichseinheit 6 endet und die einzelnen Versorgungsleitungen einzelweise, beispielsweise seitlich aus der Längenausgleichseinheit 6 herausgeführt werden.

Wie insbesondere aus der vergrößerten Darstellung gemäß Figur 2 zu entnehmen ist, ist endseitig am Flansch 16 ein Halteelement 18 befestigt und zwar an der stirnseitigen Fläche der Kupplungsstelle zur Verarbeitungseinheit hin. An seinem Freiende weist das Halteelement 18 ein als Schelle ausgebildetes Klemmelement 20 auf, in dem der jeweilige Zuführschlauch 14 einzeln zur Zugentlastung geklemmt ist. Hierzu sind im Ausführungsbeispiel innerhalb des Klemmelements 20 geeignete Einsätze vorgesehen.

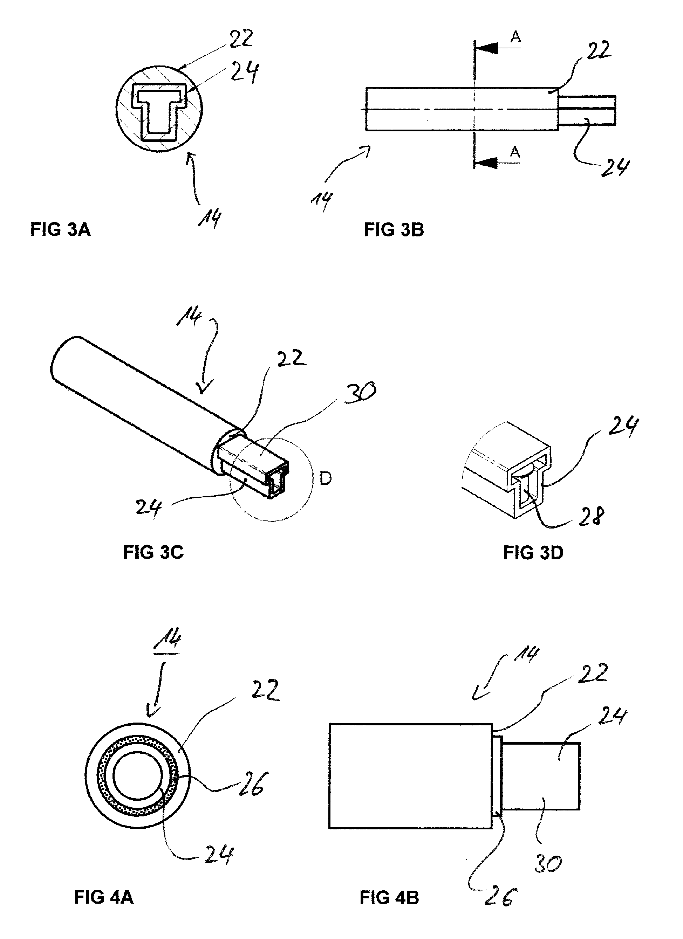

Wie bereits in Figur 2 und verbessert dann in den Figuren 3A bis 3C sowie 4A und 4B zu erkennen ist, ist der Zuführschlauch 14 gebildet durch einen äußeren Schlauchmantel 22 sowie einen inneren Inneschlauch 24. Gemäß dem Ausführungsbeispiel der Figuren 4A und 4B ist in einer alternativen Ausgestaltung zusätzlich noch eine Trennschicht 26 oder Trennlage zwischen dem Schlauchmantel 22 und dem Innenschlauch 24 vorgesehen. Diese ist insbesondere durch eine Zwischenlage beispielsweise aus einem (Polyester-)Vlies gebildet.

Der Schlauchmantel 22 ist vorzugsweise mittels eines Extrusionsprozesses auf den Innenschlauch 24 "aufgespritzt", so dass also dieser in dem Material des Schlauchmantels 22 eingebettet ist.

Zweckdienlicherweise unterscheiden sich die Materialien des Schlauchmantels 22 und des Innenschlauchs 24, insbesondere im Hinblick auf ihre Härte. Der Innenschlauch 24 ist generell durch eine hohe Härte und Steifigkeit gekennzeichnet und ist typischerweise aus Polyamid. Der Innenschlauch 24 weist üblicherweise eine Shore A-Härte im Bereich von 70 bis 80 auf. Er ist geeignet für eine Gleit-Führung von Verbindungselementen. Beispielhaft ist in Figur 3D als Verbindungselement ein Niet dargestellt.

Demgegenüber besteht der Schlauchmantel 22 aus einem Material mit deutlich geringerer Härte und insbesondere verbesserter Elastizität. Vorzugsweise besteht der Schlauchmantel 22 aus einem Polyurethan. Seine Härte liegt vorzugsweise im Bereich von 40 bis 50 shore A. Alternativ besteht sowohl der Innenschlauch 24 als auch der Schlauchmantel 22 aus Polyurethan, jedoch mit unterschiedlichen Härten. Insbesondere für diesen Fall ist zwischen den beiden Komponenten 22, 24 die als Trennschicht 26 ausgebildete Trennlage insbesondere aus einer VollBandagierung aus einem Vlies vorgesehen.

Beim Ausführungsbeispiel der Figuren 3A bis 3D weist der Innenschlauch 24 insgesamt ein T-förmiges Profil auf und ist damit insoweit an die Geometrie des Verbindungselements (Niet 28) angepasst. Unter angepasstem Innenquerschnitt wird generell verstanden, dass die Verbindungselemente innerhalb des Innenschlauches 24 in vorgegebener Soll-Lage sowie Soll-Orientierung beispielsweise mittels Druckluft auch über großen Längen von mehreren 10 Metern durch den Zuführschlauch 14 hindurch geschossen werden können. Wie insbesondere aus der Darstellung der Figur 3D zu entnehmen ist, liegt das Verbindungselement mit seinem Kopf dabei auf den seitlichen Flanken des T-förmigen Querschnittes des Inneneschlauchs 24 auf.

Im Unterschied zum Innenschlauch 24 weist der Schlauchmantel 22 generell - unabhängig von der Geometrie des Innenschlauchs 24 - eine kreisrunde Querschnittsform auf.

Im Ausführungsbeispiel der Figuren 4A und 4B ist eine Ausführungsvariante mit kreisrundem Innenschlauch 24 dargestellt. Bei diesem ist zusätzlich die als Vlies ausgebildete Trennschicht 26 zu erkennen.

Allgemein ist der Schlauchmantel 22 stofflich unverbunden mit dem Innenschlauch 24 und lässt sich daher leicht von diesem abziehen. Wie insbesondere aus Figur 2 zu entnehmen ist, wird dies dazu ausgenutzt, um endseitig den Zuführschlauch vom Schlauchmantel 22 zu befreien um dadurch ein freies Endteilstück des Innenschlauchs 24 auszubilden, welches als Steckkupplungselement 30 dient und in ein entsprechendes Kupplungselement an der Verarbeitungseinheit eingesteckt wird.

## Patentansprüche

1. Vorrichtung (2) zur automatisierten Zuführung von Verbindungselementen zu einer Verarbeitungseinheit, insbesondere ein mehrachsiger Industrieroboter, umfassend einen flexiblen Zuführschlauch (14) für die Zuführung der Verbindungselemente zur Verarbeitungseinheit, **dadurch gekennzeichnet, dass** die Vorrichtung (2) ein Schlauchpaket (10) zur Versorgung der Verarbeitungseinheit mit Betriebsmitteln umfasst, wobei das Schlauchpaket (10) einen Schutzmantel (12) aufweist, in dem eine Anzahl von Versorgungsleitungen geführt sind, wobei im Schlauchpaket (10) der flexible Zuführschlauch (14) enthalten ist und einen in einem Schlauchmantel (22) aus einem elastischen Kunststoff eingebetteten Innenschlauch (24) umfasst, der einen an die Querschnittskontur der Verbindungselemente angepassten Innenquerschnitt für eine gleitende Führung der Verbindungselemente aufweist.

2. Vorrichtung (2) nach Anspruch 1, bei der der Schlauchmantel (22) durch einen Extrusionsprozess auf den Innenschlauch (24) aufgebracht ist.

3. Vorrichtung (2) nach einem der vorhergehenden Ansprüche, bei der der Innenschlauch (24) und der Schlauchmantel (22) miteinander stofflich unverbunden sind.

4. Vorrichtung (2) nach einem der vorhergehenden Ansprüche, bei der der Innenschlauch aus einem härteren Material als der Schlauchmantel (22) ist und insbesondere aus einem Polyamid.

5. Vorrichtung (2) nach Anspruch 1, bei der der Schlauchmantel (22) aus einem thermoplastischen Elastomer ausgebildet ist.

6. Vorrichtung (2) nach einem der vorhergehenden Ansprüche, bei der zwischen dem Schlauchmantel (22) und dem Innenschlauch (24) eine Trennschicht (26), insbesondere eine Bandagierung angebracht ist.

7. Vorrichtung (2) nach einem der vorhergehenden Ansprüche, bei der der Schlauchmantel (22) endseitig vom Innenschlauch (24) entfernt ist und ein Teilstück des Innenschlauchs (24) dadurch als Steckkupplungselement (30) zur Verbindung mit der Verarbeitungseinheit ausgebildet ist.

8. Vorrichtung (2) nach Anspruch 7, bei der das Schlauchpaket (10) mit Hilfe zumindest eines Führungselements (6) an einem Tragteil der Vorrichtung (2), insbesondere an einem Roboterarm (4) geführt ist und zusätzlich ein Haltelement (18) zur Zugentlastung für den Zuführschlauch (14) am Tragteil (4) befestigt ist, das den Schlauchmantel (22) im Bereich des Steckkupplungselements (30) klemmend umgreift.

9. Vorrichtung (2) nach Anspruch 8, die als ein mehrachsiger Industrieroboter ausgebildet ist, wobei das Haltelement (18) an einem Flansch (16) zwischen einem Roboterarm (4) und einer Roboterhand befestigt ist.

10. Vorrichtung (2) nach einem der vorhergehenden Ansprüche, bei der das Schlauchpaket (14) als Versorgungsleitungen Steuerleitungen, Medienschläuche und/oder elektrische Versorgungsleitungen umfasst und ferner als Führungselement eine Längenausgleichseinheit (6) mit einer Rückstellfeder (8) für einen automatischen Längenausgleich des Schlauchpakets (14) bei einer Bewegung der Vorrichtung (2) vorgesehen ist.

11. Vorrichtung (2) nach einem der vorhergehenden Ansprüche, bei der der Innenschlauch (24) einen polygonalen und insbesondere T-förmigen Innenquerschnitt aufweist.

12. Zuführschlauch (14) für Verbindungselemente mit einem an die Querschnittskontur der Verbindungselemente angepassten Innenquerschnitt für eine gleitende Führung der Verbindungselemente, **gekennzeichnet durch** einen in einem Schlauchmantel (22) aus einem elastischen Kunststoff eingebetteten Innenschlauch (24), der den an die Querschnittskontur der Verbindungselemente angepassten Innenquerschnitt aufweist.

## Claims

1. Apparatus (2) for the automated feed of connecting elements to a processing unit, in particular a multi-axis industrial robot, comprising a flexible feed hose (14) for the feed of the connecting elements to the processing unit, **characterized in that** the apparatus (2) comprises a hose pack (10) for supplying the processing unit with production means, the hose pack (10) having a protective casing (12), in which a number of supply lines are guided, the flexible feed hose (14) being contained in the hose pack (10) and comprising an inner hose (24), which is embedded in a hose casing (22) of an elastic plastic and has an inner cross section adapted to the cross-sectional contour of the connecting elements for gliding guidance of the connecting elements.

2. Apparatus (2) according to Claim 1, in which the hose casing (22) is applied to the inner hose (24) by an extrusion process.

3. Apparatus (2) according to one of the preceding claims, in which the inner hose (24) and the hose casing (22) are unconnected to one another by integral bonding.

4. Apparatus (2) according to one of the preceding claims, in which the inner hose is made from a harder material than the hose casing (22) and in particular from a polyamide.

5. Apparatus (2) according to Claim 1, in which the hose casing (22) is formed from a thermoplastic elastomer.

6. Apparatus (2) according to one of the preceding claims, in which a separating layer (26), in particular a bandaging, is provided between the hose casing (22) and the inner hose (24).

7. Apparatus (2) according to one of the preceding claims, in which the hose casing (22) is removed at the end from the inner hose (24), and a piece of the inner hose (24) is thereby formed as a plug-in coupling element (30) for connection to the processing unit.

8. Apparatus (2) according to Claim 7, in which the hose pack (10) is guided by way of at least one guiding element (6) on a supporting part of the apparatus (2), in particular on a robot arm (4), and in addition a holding element (18) providing strain relief for the feed hose (14) is fastened on the supporting part (4) and reaches around the hose casing (22) in a clamping manner in the region of the plug-in coupling element (30).

9. Apparatus (2) according to Claim 8, which is formed as a multi-axis industrial robot, the holding element (18) being fastened on a flange (16) between a robot arm (4) and a robot hand.

10. Apparatus (2) according to one of the preceding claims, in which the hose pack (14) comprises control lines, media hoses and/or electrical supply lines as supply lines, and furthermore a length-compensating unit (6) comprising a return spring (8) for an automatic length compensation of the hose pack (10) when there is a movement of the apparatus (2) is provided as a guiding element.

11. Apparatus (2) according to one of the preceding claims, in which the inner hose (24) has a polygonal, and in particular T-shaped, inner cross section.

12. Feed hose (14) for connecting elements with an inner cross section adapted to the cross-sectional contour of the connecting elements for gliding guidance of the connecting elements, **characterized by** an inner hose (24), which is embedded in a hose casing (22) made from an elastic plastic and has the inner cross section adapted to the cross-sectional contour of the connecting elements.

## Revendications

1. Dispositif (2) d'amenée automatisée d'éléments de liaison à une unité d'usinage, en particulier un robot industriel à plusieurs axes, comprenant un tuyau d'amenée souple (14) pour amener les éléments de liaison à l'unité d'usinage, **caractérisé en ce que** le dispositif (2) comprend un paquet de tuyaux (10) pour l'alimentation de l'unité d'usinage en moyens fonctionnels, le paquet de tuyaux (10) présentant une gaine de protection (12) dans laquelle sont guidées une pluralité de conduites d'alimentation, le tuyau d'amenée flexible (14) étant contenu dans le paquet de tuyaux (10) et comprenant un tuyau interne (24) incorporé dans une gaine de tuyau (22) en matière plastique élastique, lequel tuyau interne présente une section transversale interne adaptée au contour en section transversale des éléments de liaison pour un guidage glissant des éléments de liaison.

2. Dispositif (2) selon la revendication 1, dans lequel la gaine de tuyau (22) est appliquée sur le tuyau interne (24) par un processus d'extrusion.

3. Dispositif (2) selon l'une quelconque des revendications précédentes, dans lequel le tuyau interne (24) et la gaine de tuyau (22) ne sont pas reliés l'un à l'autre par liaison de matière.

4. Dispositif (2) selon l'une quelconque des revendications précédentes, dans lequel le tuyau interne se compose d'un matériau plus dur que celui de la gaine de tuyau (22), en particulier d'un polyamide.

5. Dispositif (2) selon la revendication 1, dans lequel la gaine de tuyau (22) se compose d'un élastomère thermoplastique.

6. Dispositif (2) selon l'une quelconque des revendications précédentes, dans lequel une couche de séparation (26), en particulier un bandage, est appliquée entre la gaine de tuyau (22) et le tuyau interne (24).

7. Dispositif (2) selon l'une quelconque des revendications précédentes, dans lequel la gaine de tuyau (22) est éloignée du tuyau interne (24) du côté de l'extrémité et une pièce partielle du tuyau interne (24) est de ce fait réalisée sous forme d'élément d'accouplement par enfichage (30) pour la liaison à l'unité d'usinage.

8. Dispositif (2) selon la revendication 7, dans lequel le paquet de tuyaux (10) est guidé à l'aide d'au moins un élément de guidage (6) au niveau d'une partie porteuse du dispositif (2), en particulier au niveau d'un bras de robot (4) et en outre un élément de retenue (18) pour la détente de traction pour le tuyau d'amenée (14) est fixé à la partie porteuse (4), lequel vient en prise par serrage autour de la gaine de tuyau (22) dans la région de l'élément d'accouplement par enfichage (30).

9. Dispositif (2) selon la revendication 8, lequel est réalisé sous forme de robot industriel à plusieurs axes, l'élément de retenue (18) étant fixé au niveau d'une bride (16) entre un bras de robot (4) et une main de robot.

10. Dispositif (2) selon l'une quelconque des revendications précédentes, dans lequel le paquet de tuyaux (14) comprend, en tant que conduites d'alimentation, des conduites de commande, des tuyaux de fluide et/ou des conduites d'alimentation électriques et en outre, en tant qu'élément de guidage, une unité de compensation de longueur (6) est prévue avec un ressort de rappel (8) pour une compensation automatique de longueur du paquet de tuyaux (10) lors d'un déplacement du dispositif (2).

11. Dispositif (2) selon l'une quelconque des revendications précédentes, dans lequel le tuyau interne (24) présente une section transversale interne polygonale et notamment en forme de T.

12. Tuyau d'amenée (14) pour des éléments de liaison, comprenant une section transversale interne adaptée au contour en section transversale des éléments de liaison pour un guidage glissant des éléments de liaison, **caractérisé par** un tuyau interne (24) incorporé dans une gaine de tuyau (22) en matière plastique élastique, lequel tuyau interne présente la section transversale interne adaptée au contour en section transversale des éléments de liaison.
